# EUROPÄISCHE PATENTANMELDUNG

(11) **EP 1 500 571 A1**
(43) Veröffentlichungstag der Anmeldung: **26.01.2005**
(21) Anmeldenummer: 04102915.8
(22) Anmeldetag: 23.06.2004
(51) Int. Cl.: B62D 1/22

(54) **Lenkvorrichtung für ein Kraftfahrzeug**

(30) Priorität: 25.07.2003 DE 10334006
(71) Anmelder: Bayerische Motoren Werke Aktiengesellschaft, 80809 München (DE)
(72) Erfinder: Faulstroh, Hans-Joachim, 86938, Schondorf (DE); Fischer, Marcus, 80939, München (DE); Felten, Jan, 81925, München (DE); Schmidt, Roland, 82131, Stockdorf (DE)

(57) **Zusammenfassung**

Die Erfindung betrifft eine Lenkvorrichtung für ein Kraftfahrzeug, insbesondere einen PKW, mit zumindest zwei verschiedenartigen Lenkhandhaben zur Beeinflussung des Einschlagwinkels der lenkbaren Fahrzeug-Räder, wobei jede Lenkhandhabe im wesentlichen einem unterschiedlichen Betriebszustand oder Fahrzustand des Kraftfahrzeugs zugeordnet ist. Bevorzugt sind den einzelnen Lenkhandhaben unterschiedliche Lenkwinkel-Übersetzungen zugeordnet, derart, dass eine erste Lenkhandhabe für die Umsetzung relativ großer Rad-Einschlagwinkel, insbesondere bei niedrigen Fahrgeschwindigkeiten, vorgesehen ist, während eine zweite oder andere Lenkhandhabe für den üblichen Fahrbetrieb, bevorzugt bei höheren Fahrgeschwindigkeiten vorgesehen ist. Die erste Lenkhandhabe kann vom Fahrer mit den Händen bedient werden, während eine zweite oder weitere Lenkhandhabe mit dem oder den Unterarm(en) oder Oberarm(en) oder Schulterbereich(en) des Fahrers bedienbar ist.

## Beschreibung

Die vorliegende Erfindung bezieht sich auf eine Lenkvorrichtung für ein Kraftfahrzeug, insbesondere für einen PKW.

Üblicherweise besteht die Lenkvorrichtung bei bekannten Kraftfahrzeugen aus einem Lenkrad, das während des gesamten Fahrbetriebs mit den Händen zur Lenkung betätigt oder zumindest festgehalten werden muss, ungeachtet der dem jeweiligen Fahrbetrieb bzw. Fahrzustand zugeordneten Lenkanforderungen. Im Normalfall bedarf es bei höheren Geschwindigkeiten, insbesondere beim Befahren längerer Strecken ohne merkliche Richtungsänderung, z. B. auf der Autobahn, keiner großen Lenkeinschläge. Die Hände ruhen auf dem Lenkrad und führen nur gelegentlich geringfügige Richtungskorrekturen entweder innerhalb des Fahrstreifens oder bei einem Spurwechsel, bspw. wegen eines Überholvorgangs aus. Die Körperhaltung des Fahrers ist den der Fahrsituation zugrundeliegenden Erfordernissen dabei nicht optimal angepasst. Andererseits kann auf eine Lenkvorrichtung entweder in Form eines Lenkrades oder in der Form von zwei Griffen (Sticks) nicht verzichtet werden, da aufwändigere Lenkvorgänge, vorzugsweise bei geri ngerer Geschwindigkeit, bspw. häufiges Abbiegen in der Stadt oder Lenkmanöver beim Einparken eine feinmotorische Bedienung mittels der Hände erfordern.

Eine Abhilfemaßnahme für diese geschilderte Problematik aufzuzeigen, ist Aufgabe der vorliegenden Erfindung.
Vorgeschlagen wird daher eine Lenkvorrichtung für ein Kraftfahrzeug, insbesondere einen PKW, mit zumindest zwei verschiedenartigen Lenkhandhaben zur Beeinflussung des Einschlagwinkels der lenkbaren Fahrzeug-Räder, wobei jede Lenkhandhabe im wesentlichen einem unterschiedlichen Betriebszustand oder Fahrzustand des Kraftfahrzeugs zugeordnet ist. Vorteilhafte Weiterbildungen sind Inhalt der Unteransprüche.

Beispielsweise auf längeren geraden Fahr-Strecken, auf denen höchstens leichte Richtungskorrekturen vorgenommen werden müssen, reicht es erfindungsgemäß aus, dass das Fahrzeug durch eine gesonderte und bevorzugt hierfür geeignet ausgebildete (zweite) Lenkhandhabe gesteuert wird, wohingegen zur Umsetzung größerer Lenkeinschläge eine wie bisher bereits übliche (erste) Lenkhandhabe vorgesehen ist bzw. sein kann. Bei letzterer kann es sich bspw. um ein übliches Lenkrad oder auch um sog. "Sticks" handeln, d.h. bevorzugt in Seitrichtung kippbare Griffe oder Stäbe oder dgl., wie sie dem Fachmann für Lenkhandhaben bereits durchaus bekannt sind. Dabei wird diese erste Lenkhandhabe bevorzugt vom Fahrer wie üblich mit den Händen bedient.

Die weitere erfindungsgemäß vorgesehene (zweite) Lenkhandhabe kann bspw. durch eine Bewegung der Unterarme oder auch der Schultern des Fahrers betätigt werden. So kann der Fahrer seine Unterarme in geeignet geformten Halbschalen ablegen, die eine seitliche Bewegung der Arme mitmachen und dies als einen Lenkwunsch des Fahrers interpretieren. Mit seinen Händen kann der Fahrer gleichzeitig die erste Lenkhandhabe ergreifen, er kann aber auch die Hände vom Lenkrad oder den "Sticks" nehmen und seine Haltung entspannen. Eine insgesamt entspanntere Haltung im Fahrzeugsitz dient nicht nur dem ergonomischen Komfort, sondern auch der Gesundheit des Fahrers, da die Gefahr von Verspannungen und Rückenbeschwerden herabgesetzt wird. Alternativ oder zusätzlich kann diese zweite Lenkhandhabe vom Fahrer bspw. mit seinen Schultern betätigt werden, wofür bspw. an der Sitzlehne im Schulterbereich seitlich verschwenkbare Paddel oder dgl. vorgesehen sein können, aus deren Verschwenkbewegung ein Lenkwunsch des Fahrers abgeleitet wird. Bei einer Lenkung beispielsweise durch die Unterarme und/oder die Schultern erfährt der Fahrer vorteilhafterweise eine "Verschmelzung" mit seinem Fahrzeug, was sein Gefühl für das Fahrzeug und das Fahren an sich verbessert.

In Anbetracht der unterschiedlichen Lenkanforderungen, die abhängig sind vom Fahrbetrieb bzw. Fahrzustand des Fahrzeugs, ist es somit vorteilhaft, die Lenkung des Kraftfahrzeugs auf zwei verschiedene Lenkhandhaben zu verteilen, denen im Sinne einer vorteilhaften Weiterbildung unterschiedliche Lenkwinkel-Übersetzungen zugeordnet sind. Vorteilhaft ist es dabei, die genannte erste Lenkhandhabe für die Umsetzung relativ großer Rad-Einschlagwinkel, insbesondere bei geringen Fahrgeschwindigkeiten, vorzusehen und die andere, zweite Lenkhandhabe für den üblichen Fahrbetrieb bevorzugt bei höheren Fahrgeschwindigkeiten vorzusehen, wobei hier die Übersetzung so gewählt ist, dass lediglich reativ kleine Rad-Einschlagwinkel erzeugt werden können. Der Fahrbetrieb bei geringerer Geschwindigkeit z.B. im Stadtbereich erfordert nämlich generell ein höheres Maß an gezielten Lenkmanövern, weshalb die genannte erste Lenkhandhabe für die Umsetzung relativ großer Radeinschlagwinkel mit den Händen bedienbar sein kann und vorzugsweise als Lenkrad oder in Form von "Sticks". ausgebildet sein kann, denn gerade beim Einparken ist die Feinmotorik der Hände optimal. Für den Fahrbetrieb bei hoher Geschwindigkeit, z.B. auf der Autobahn, genügt eine geringe Lenkwinkel-Umsetzung, da es hier bis auf kleinere Korrekturen keine gravierenden Richtungswechsel gibt, so dass hier ein entsprechender Lenkwunsch durchaus auch durch eine Bewegung anderer Körperteile des Fahrers, so bspw. seiner Unterarme oder Schultern, vorgegeben werden kann.

Vorteilhafterweise wird die genannte erste Lenkhandhabe wie bislang bereits üblich vom Fahrer mit den Händen bedient, während die andere, zweite Lenkhandhabe mit den Unterarmen, Oberarmen oder dem Schulterbereich des Fahrers bedient wird. Bei längeren Strecken, auf denen weder eine Richtungsänderung noch eine erhebliche Verlangsamung der Geschwindigkeit z. B. auf der Autobahn abzusehen ist, führt die Umstellung von der feinmotorischen Lenkhandhabe durch die Hände auf die Groblenkung mit den Unter-, Oberarmen oder dem Schulterbereich zur Entspannung der Hände und Finger. Insbesondere trägt eine Lenkhandhabe, die mittels Unter- bzw. Oberarmen bedient wird, zu einer insgesamt entspannteren Haltung des Fahrers bei. Die Unterarme sind beispielsweise auf die zweite Lenkhandhabe gestützt und können gleichzeitig geringe Richtungskorrekturen nach links oder nach rechts ausführen. Durch die auf der entsprechend geformten (zweiten) Lenkhandhabe abgelegten Arme wird auch der Schulterbereich und damit der Rücken des Fahrers entspannt. Wird die zweite Lenkhandhabe mit dem Schulterbereich bedient, so kann eine Richtungsänderung durch eine Verlagerung des Oberkörpers nach links oder rechts bewirkt werden. Diese Verlagerung führt zu einer Bewegung des Rückens, was vorteilhaft ist, da hierdurch der Fahrer nicht über eine längere Fahrtstrecke eine starre Körperhaltung beibehält.

Die vorliegende Erfindung revolutioniert die bisher bekannte Form der Lenkung und schafft Raum für völlig neue Fahrkonzepte. Eine neue Form von Fahrkomfort wird erreicht durch die ergonomischen Vorteile, die sich aus der Erfindung ergeben. Dabei ist es möglich, dass in Zukunft die Fernregelung des Kfz-Verkehrs an Bedeutung gewinnt. Mit einer entsprechenden Steuerung, die das Kraftfahrzeug beispielsweise in einer gewissen Spurbreite hält, kann der Fahrer die erfindungsgemäße zweite Lenkhandhabe auch für geringfügige Richtungskorrekturen verwenden.

## Patentansprüche

1. Lenkvorrichtung für ein Kraftfahrzeug, insbesondere einen PKW, mit zumindest zwei verschiedenartigen Lenkhandhaben zur Beeinflussung des Einschlagwinkels der lenkbaren Fahrzeug-Räder, wobei jede Lenkhandhabe im wesentlichen einem unterschiedlichen Betriebszustand oder Fahrzustand des Kraftfahrzeugs zugeordnet ist.

2. Lenkvorrichtung nach Anspruch 1,
**dadurch gekennzeichnet, dass** den einzelnen Lenkhandhaben unterschiedliche Lenkwinkel-Übersetzungen zugeordnet sind.

3. Lenkvorrichtung nach Anspruch 1 oder 2,
**dadurch gekennzeichnet, dass** eine erste Lenkhandhabe für die Umsetzung relativ großer Rad-Einschlagwinkel, insbesondere bei niedrigen Fahrgeschwindigkeiten, vorgesehen ist, während eine zweite oder andere Lenkhandhabe für den üblichen Fahrbetrieb, bevorzugt bei höheren Fahrgeschwindigkeiten vorgesehen ist.

4. Lenkvorrichtung nach einem der vorangegangenen Ansprüche,
**dadurch gekennzeichnet, dass** eine erste Lenkhandhabe vom Fahrer mit den Händen bedient wird, während eine zweite oder weitere Lenkhandhabe mit dem oder den Unterarm(en) oder Oberarm(en) oder Schulterbereich(en) des Fahrers bedienbar ist.
